(19) Europäisches Patentamt
European Patent Office
Office européen des brevets

(11) **EP 1 290 433 B1**

(12) **EUROPÄISCHE PATENTSCHRIFT**

(45) Veröffentlichungstag und Bekanntmachung des Hinweises auf die Patenterteilung:
**20.08.2008 Patentblatt 2008/34**

(21) Anmeldenummer: **01947194.5**

(22) Anmeldetag: **08.06.2001**

(51) Int Cl.:
***G01N 27/406*** *(2006.01)*

(86) Internationale Anmeldenummer:
**PCT/DE2001/002139**

(87) Internationale Veröffentlichungsnummer:
**WO 2001/096849 (20.12.2001 Gazette 2001/51)**

(54) **VERFAHREN UND VORRICHTUNG ZUM BETRIEB EINER LINEAREN LAMBDASONDE**

METHOD AND DEVICE FOR OPERATING A LINEAR LAMBDA PROBE

PROCEDE ET DISPOSITIF PERMETTANT DE FAIRE FONCTIONNER UNE SONDE LAMBDA LINEAIRE

(84) Benannte Vertragsstaaten:
**DE ES FR IT SE**

(30) Priorität: **16.06.2000 DE 10029831**

(43) Veröffentlichungstag der Anmeldung:
**12.03.2003 Patentblatt 2003/11**

(73) Patentinhaber: **Continental Automotive GmbH 30165 Hannover (DE)**

(72) Erfinder: **BOLZ, Stephan 93102 Pfatter (DE)**

(56) Entgegenhaltungen:
DE-A- 3 817 518    US-A- 4 135 381
US-A- 5 106 481    US-A- 5 173 167

## Beschreibung

Die Erfindung betrifft ein Verfahren zum Betrieb einer linearen Lambdasonde einer Brennkraftmaschine nach dem Oberbegriff von Anspruch 1. Sie betrifft auch eine Vorrichtung zur Durchführung dieses Verfahrens nach Anspruch 5.

Eine lineare Lambdasonde wird verwendet, um die Sauerstoff-konzentration im Abgas einer Brennkraftmaschine zu bestimmen. Sie weist zwei Elektrodenpaare sowie eine Meßkammer auf, die über eine Diffusionsbarriere mit dem Abgasstrom verbunden ist. Das erste Elektrodenpaar (Meßelektroden) ist zwischen Meßkammer und Luft angeordnet und dient der Messung der Sauerstoffkonzentration in der Meßkammer. Das zweite Elektrodenpaar (Pumpelektroden) ist zwischen der Meßkammer und dem Abgasstrom angeordnet. Es erlaubt, bei Anlegen eines Stromes Ip entsprechender Polarität, Sauerstoffionen aus der Meßkammer heraus oder in sie hinein zu pumpen.

Damit ist es möglich, ein dynamisches Gleichgewicht zwischen Sauerstoff-Fluss durch die Diffusionsbarriere und Sauerstoffionenfluss durch das Pumpelektrodenpaar zu erzeugen. Als Regelkriterium eignet sich dabei die mit den Meßelektroden bestimmbare Sauerstoffkonzentration in der Meßzelle. Ein Vorzugswert ist z.B. 450mV für $\lambda=1$. Der in diesem Falle fließende Pumpstrom Ip ist ein Maß für die Sauerstoffkonzentration im Abgas (und nach numerischer Umwandlung auch für $\lambda$).

Bisher ist die Anwendung der linearen Lambdasonde auf den nichtaufgeladenen, stöchiometrischen Betrieb (Pa=1bar, $\lambda=1$) des Motors beschränkt. Entsprechend sind auch nur geringe Pumpströme zur Aufrechterhaltung des Gleichgewichtes ($\lambda=1$) in der Meßzelle erforderlich ($|Ip|<\sim2.5mA$).

Für Magermotoren ist ein Betrieb bis $\lambda=4$ vorgesehen, was einen drastisch erhöhten Pumpstrom Ip erfordert. Bei Betrieb in einem aufgeladenen (Turbo-)Motor ergibt sich ein Abgasdruck von bis zu 2bar. Die Druckempfindlichkeit der Sonde führt zu einer weiteren Erhöhung des maximal notwendigen Pumpstromes auf bis zu $\pm12mA$.

Der dynamische Widerstand der Diffusionsbarriere weist eine Temperaturabhängigkeit auf, was zu Fehlern im Übersetzungsverhältnis führt. Man begegnet dem durch Messung der Sondentemperatur und Regelung mittels eines in der Sonde eingebauten Heizelementes. Aus Kostengründen wird dabei auf ein separates Thermoelement verzichtet. Man mißt statt dessen den stark temperaturabhängigen Innenwiderstand Ris der Sonde.

Ein gängiges Messverfahren zur Bestimmung des Sondeninnenwiderstandes Ris ist die Beaufschlagung des Sondenanschlusses Vs+ mit einem Messsignal M aus einem rechteckförmigen Wechselstrom - beispielsweise 500µAss (Spitze-Spitze) mit einer Frequenz fm von beispielsweise 3kHz. Dieser Wechselstrom bewirkt am Sondeninnenwiderstand Ris von beispielsweise 100Ω eine Wechselspannung von 500µAss*100Ω = 50mVss. Diese Wechselspannung wird in einem Verstärker verstärkt, beispielsweise um den Faktor 10, und anschließend gleichgerichtet. Die so entstandene Gleichspannung Vri kann als Maß für die Sondentemperatur verwendet und weiterverarbeitet werden.

Ein entsprechendes Beispiel wird in DE 3817518 beschrieben. Eine bekannte Auswerteschaltung ist in Figur 1 dargestellt und wird weiter unten beschrieben.

Diese Schaltung hat gewisse Nachteile: Bei Versorgung der Auswerteschaltung mit einer in der Regel bereits vorhandenen Versorgungsspannung Vcc = 5V ergibt sich eine Mittenspannung Vm von ca. 2.5V. Die an der Sonde anliegende Spannungskette ergibt sich zu:

$$Vm < |Rc*Ip + Vp|+Vsat;$$

mit
Rc = 30 bis 100Ω = gesamter Kalibrierwiderstand (Herstellerabhängig),
Vp = -350 bis +450mV; Polarisationsspannung der Pumpzelle,
Vsat = 100 bis 200mV; Sättigungsspannung der Pumpstromquelle P;
dies begrenzt den maximal möglichen Pumpstrom Ip auf <10mA, entspricht also nicht den Anforderungen (Ip = $\pm12mA$);
der Pumpstrom Ip ist mit einem Gleichtaktsignal (Vm$\pm$2V) überlagert. Bedingt durch die endliche Gleichtaktunterdrückung realer intergrierter Verstärker (z.B. 65dB) wird die Messung um bis zu $\pm0.3\%$ verfälscht;
zusätzlich entsteht durch die Polarisationsspannung der Pumpzelle (-350mV bei $\lambda<1$) ein Nullpunktfehler $\Delta Ip$ von ca 5µA. Da der Pumpstrom Ip das primäre Messsignal der Sauerstoffsonde ist, gehen diese Fehler direkt in die Gesamtgenauigkeit des Pumpstroms Ip ein. Dies begrenzt die Genauigkeit der Lambdaregelung und stellt somit ein signifikantes Problem dar;
ein weiteres prinzipielles Problem dieser Schaltungsanordnung ist die wechselseitige Beeinflussung der Nernstspannung Vs und der aus der Innenwiderstandsmessung entstandenen Rechteckspannung Vr. Diese Rechteckspannung Vr erscheint auch am Eingang des Reglers R und stellt somit eine Regelabweichung dar. Der Regler wird - im Rahmen seiner Bandbreite - versuchen, diese Regelabweichung auszugleichen. Dazu ändert er den Pumpstrom Ip, was wiederum Auswirkungen auf Vs hat. Da der Pumpstrom Ip die Meßgröße für $\lambda$ ist, wird das primäre Sondensignal Vs verfälscht. Die Änderung von Vs wiederum ist der Rechteckspannung Vr überlagert. In der Wirkung ergibt dies eine Abschrägung des Signaldaches der Rechteckspannung Vr und damit bei der Gleichrichtung einen erheblichen Amplitudenfehler; auch beim Auftreten von EMV-Störsignalen ergibt sich eine erhebliche Abweichung vom eigentlichen Meßwert des Innenwiderstandes Ris.

Es ist Aufgabe der Erfindung, ein Verfahren zum Betrieb einer linearen Lambdasonde anzugeben, welches den gestellten Anforderungen entsprechende Werte des Pumpstroms Ip zur Verfügung stellt, durch welches der beschriebene Gleichtaktfehler vermieden und die Genauigkeit der Pumpstrom-Messung wesentlich verbessert wird, so dass keine wechselseitige Beeinflussung von Nernstspannung Vs und Rechteckspannung Vr auftritt und die Genauigkeit der Innenwiderstandsmessung verbessert wird, und welche auch bei niedriger Batteriespannung (Vb kleiner oder gleich +6V) funktionsfähig bleibt. Es ist auch Aufgabe der Erfindung, eine Vorrichtung zur Durchführung dieses Verfahrens anzugeben.

Diese Aufgabe wird erfindungsgemäß durch die Merkmale der Ansprüche 1 und 5 gelöst.

Nachstehend wird ein Ausführungsbeispiel der Erfindung anhand einer schematischen Zeichnung näher beschrieben. In der Zeichnung zeigen:

Figur 1    die Prinzipschaltung einer bekannte Vorrichtung zum Betrieb einer Lambdasonde,

Figur 2    die Prinzipschaltung einer erfindungsgemäßen Vorrichtung zum Betrieb einer Lambdasonde,

Figur 3    ein Diagramm, das die Gewinnung von Nernstspannung Vs und der den Innenwiderstand Ris repräsentierenden Spannung Vri aus der Summenspannung Vsum von Nernstspannung Vs und Rechteckspannung Vr darstellt,

Figur 4    ein Diagramm der Steuersignale für die Schalterbetätigung,

Figur 5    eine Schaltung zur Erzeugung der Steuersignale für die Schalterbetätigung,

Figur 6    den Restfehler des ungefilterten Differenzsignals.

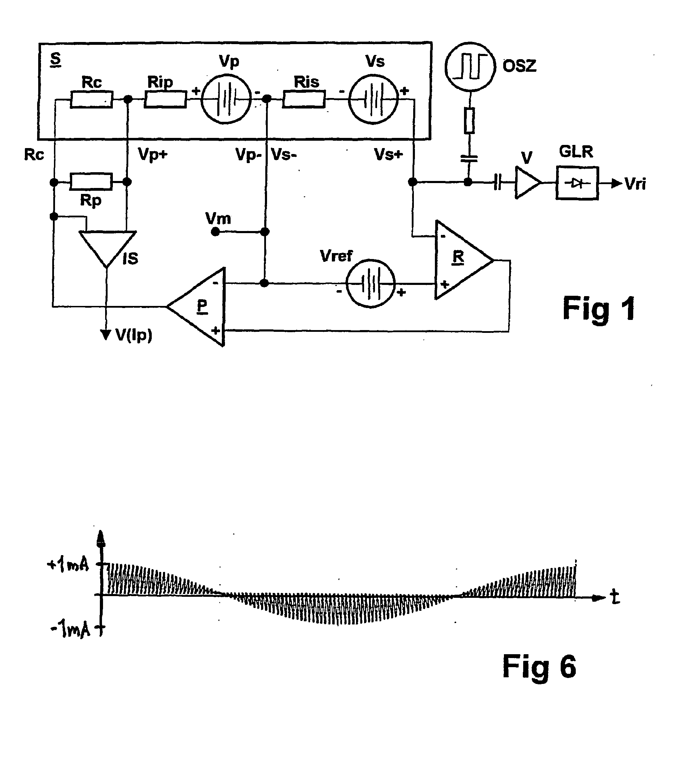

Figur 1 zeigt ein Prinzipschaltbild der bekannten Vorrichtung zum Betrieb einer linearen Lambdasonde einer Brennkraftmaschine im Bereich $\lambda = 1$. Die Lambdasonde S besteht

a) aus der sog. Referenzzelle, d.h., aus den Elektroden zwischen Meßkammer und Luft, in der Zeichnung dargestellt durch die zwischen den Elektroden meßbare Nernstspannung Vs und den Innenwiderstand Ris der Diffusionsbarriere zwischen ihnen,

b) aus der sog. Pumpzelle, d.h., aus den Elektroden zwischen Meßkammer und Abgas, dargestellt durch die zwischen ihnen abfallende Pumpspannung Vp und den (Referenz-)Widerstand Rip zwischen diesen Elektroden, und

c) aus dem im nicht dargestellten Sondenstecker befindlichen Kalibrierwiderstand Rc.

Die Elektroden sind auf den Keramikkörper der Sonde aufgebracht. Das Keramikmaterial zwischen den Elektrodenpaaren ist bei hohen Temperaturen leitfähig und dient als Festkörperelektrolyt.

Aus der Sonde S sind ein erster Anschluss Vs+, ein zweiter Anschluss Vp-/Vs-, ein dritter Anschluss Vp+ und ein vierter Anschluss Rc herausgeführt und mit der Auswerteschaltung verbunden. Die Sondenheizung und ihre Anschlüsse sind nicht dargestellt.

Der invertierende Eingang R- eines Differenzverstärkers R ist mit dem ersten Anschluß Vs+ der Sonde S verbunden, sein nichtinvertierender Eingang R+ ist über eine Referenzspannung Vref mit der Mittenspannung Vm verbunden (Vm = Vcc/2), wobei Vcc (üblicherweise 5V) die Versorgungsspannung der Schaltung ist.

Mit der Mittenspannung Vm sind auch der zweite Sondenanschluß Vp-/Vs- und der invertierende Eingang P- einer Pumpstromquelle P verbunden, deren nichtinvertierender Eingang P+ mit dem Ausgang des Differenzverstärkers R verbunden ist.

Der Ausgang der Pumpstromquelle P ist mit dem vierten Eingang Rc der Sonde S verbunden.

Da der Widerstand Rc aufgrund seiner Einbaulage im Sondenstecker erheblichen Umweltbelastungen ausgesetzt ist, wird ihm im Steuergerät ein weiterer Widerstand Rp an den Anschlüssen Vp+ und Rc parallel geschaltet. Dies reduziert den Einfluß eines Toleranzfehlers von Rc auf die Meßgenauigkeit des Pumpstromes Ip.

Der Differenzverstärker R vergleicht die Nernstspannung Vs der Sonde S (zwischen Außenluft und Messzelle) mit der Referenzspannung Vref (450mV) und erzeugt eine der Differenz proportionale Ausgangsspannung, die von der Pumpstromquelle P in einen proportionalen Pumpstrom Ip umgewandelt wird, welcher durch die Parallelschaltung von Rc und Rp und durch die Pumpzelle (Rip und Vp) zu Vm fließt. Der Pumpstrom Ip führt zu einer Änderung der Sauerstoffkonzentration in der nicht dargestellten Meßzelle der Sonde S, was wiederum eine Änderung der Nernstspannung Vs zur Folge hat.

Die Ermittlung der Sauerstoffkonzentration $\lambda$ im Abgas erfolgt über eine Messung des durch die Parallelschaltung der Widerstände Rc und Rp und durch die Pumpzelle fließenden Pumpstroms Ip. Dazu wird der vom Pumpstrom Ip hervorgerufene Spannungsabfall V(Ip) an der Parallelschaltung von Rc und Rp mittels eines Differenzverstärkers IS gemessen.

Bei dieser bekannten Auswerteschaltung sind die Mittenspannung Vm = Vcc/2 und die Referenzspannung Vref mit dem zweiten Anschluß Vp-/Vs- der Lambdasonde verbunden.

Im stabilen Regelzustand (λ=1) in der Meßzelle beträgt die Nernstspannung Vs = 450mV. Es herrscht ein Gleichgewichtszustand zwischen dem Sauerstoff-Fluss durch die Diffusionsbarriere und dem Sauerstoffionen-Fluss, bedingt durch den Pumpstrom Ip. Der Wert von Vp liegt dabei - abhängig von der Sauerstoffkonzentration im Abgas - zwischen 450mV (Luft) und -350mV (fettes Gemisch).

Der maximale Bereich der Ausgangsspannung der Pumpstromquelle P reicht von ca 0.1V bis 4.9V.

Zur Messung des Sondeninnenwiderstandes Ris wird die Sonde S mit einem Meßsignal M, beispielsweise einem in einem Oszillator OSZ erzeugten, rechteckförmigen Wechselstrom von 500µAss (Spitze-Spitze) und einer Frequenz von 3kHz, beauf-schlagt. Über einen hochohmigen Widerstand und Entkoppelkondensator (ohne Bezugszeichen in Figur 1) wird das Signal dem ersten Anschluß Vs+ der Lambdasonde zugeleitet. Am Innenwiderstand Ris, der beispielsweise gerade 100Ω betrage, entsteht dann eine Rechteckspannung Vr = 500µAss*100Ω = 50mVss. Diese Rechteckspannung Vr wird in einem Verstärker V verstärkt und in einem Spitzenwertgleichrichter GLR gleichgerichtet und kann dann als Gleichspannung Vri einem nicht dargestellten Mikroprozessor als Regelsignal für die Temperaturregelung der Lambdasonde S zugeführt werden. Die Nachteile dieser Schaltung sind bereits oben dargelegt worden.

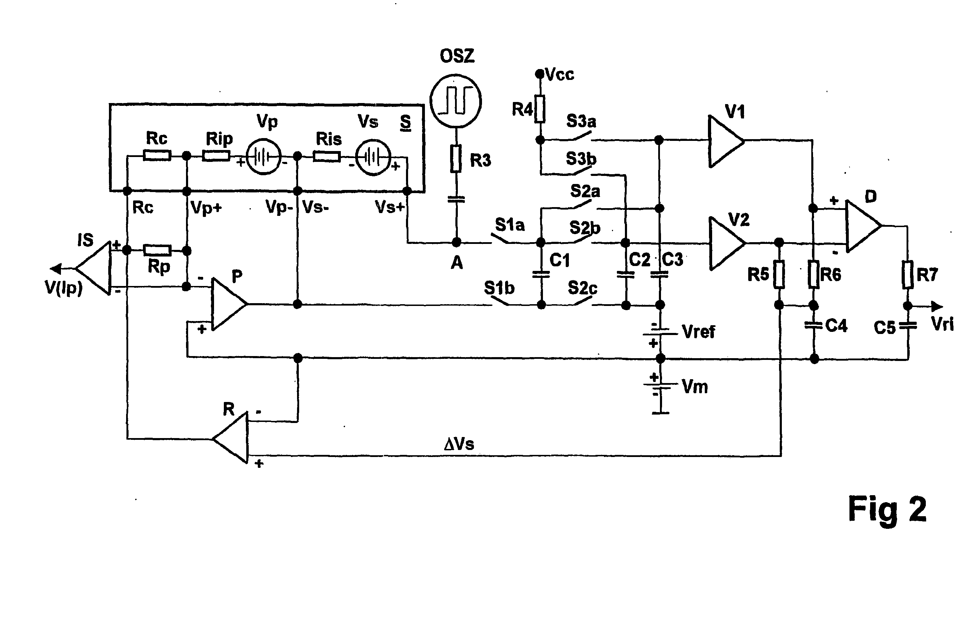

Figur 2 zeigt eine Prinzipschaltung einer erfindungsgemäßen Vorrichtung zum Betrieb einer Lambdasonde. Das erfindungsgemäße Verfahren wird anhand der Arbeitsweise dieser Vorrichtung weiter unten näher erläutert.

Die Lambdasonde S ist bereits aus Figur 1 bekannt, ebenso der dem Widerstand Rc parallelgeschaltete Widerstand Rp und der Differenzverstärker IS, an dessen Ausgang eine dem Pumpstrom Ip proportionale Spannung V(Ip) als Maß für die Sauerstoffkonzentration im Abgas der Brennkraftmaschine abgreifbar ist.

Der Oszillator OSZ erzeugt ein rechteckförmiges Oszillatorsignal OS mit einer Frequenz f, aus welchem ein Meßsignal M mit der Frequenz fm durch Frequenzteilung (fm=f/2$^x$) gewonnen wird. Beispielsweise sei f=48kHz und fm=3kHz, mit x=4.

Die Phasenlage zwischen den Signalen OS und M sei dabei dergestalt, daß das Meßsignal M bei der Hälfte der Dauer eines Low Pegels des Oszillatorsignals OS schaltet (90° Phasenverschiebung bezüglich OS). Das Meßsignal M wird am Sondenanschluß Vs+ eingespeist.

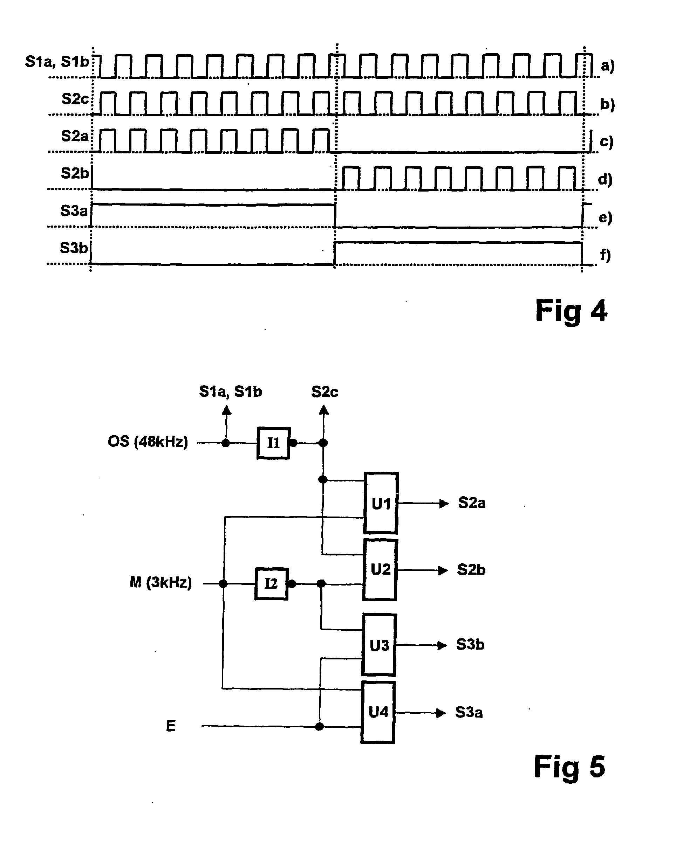

Im Oszillator OSZ sei auch eine in Figur 5 dargestellte und später beschriebene Schaltung zur Betätigung verschiedener Schalter integriert.

Dem nichtinvertierenden Eingang P+ der Pumpstromquelle P (bestehend aus einem Operationsverstärker und der mit seinem invertierenden Eingang P- verbundenen Parallelschaltung der Widerstände Rc und Rp) wird die Mittenspannung Vm zugeführt, und sein Ausgang ist mit dem zweiten Sondenanschluß Vp-/Vsverbunden. Der Ausgang der Pumpstromquelle P ist weiterhin über einen Schalter S1b mit dem Fußpunkt eines ersten (Transfer-)Kondensators C1 verbunden. Dieser Fußpunkt ist über einen weiteren Schalter S2c mit den Fußpunkten eines zweiten und dritten Kondensators C2 und C3 sowie mit dem Minuspol der Referenzspannung Vref verbunden. Die Pluspole von Referenzspannung Vref und Mittenspannung Vm sind miteinander verbunden.

Der Sondenanschluß Vs+ ist über einen Schalter S1a mit dem Kondensator C1 verbunden. Ein Schalter S2b verbindet Kondensator C1 mit Kondensator C2 und mit dem Eingang eines zweiten Entkopplungsverstärkers V2, dessen Ausgang mit dem invertierenden Eingang D- eines Differenzverstärkers D verbunden ist. Ein Schalter S2a verbindet Kondensator C1 mit einem dritten Kondensator C3 und mit dem Eingang eines ersten Entkopplungsverstärkers V1, dessen Ausgang mit dem nichtinvertierenden D+ des Differenzverstärkers D verbunden ist.

Der Ausgang des Differenzverstärkers D ist über ein RC-Glied, bestehend aus einem Widerstand R7 und einem Kondensator C5, mit dem Pluspol der Mittenspannung Vm verbunden.

Vom Pluspol der Versorgungsspannung Vcc (+5V) führt eine Reihenschaltung eines Widerstandes R4 und eines Schalters S3b zum Eingang des zweiten Entkopplungsverstärkers V2 und zum zweiten Kondensator C2. Der Widerstand R4 ist über einen weiteren Schalter S3a mit dem Eingang des ersten Entkopplungsverstärkers V1 und mit dem dritten Kondensator C3 verbunden.

Zwischen den Ausgängen der beiden Entkopplungsverstärker V1 und V2 ist ein Spannungsteiler aus zwei gleich großen Widerständen R5 und R6 angeordnet, dessen Abgriff einerseits über einen vierten Kondensator C4 mit dem Pluspol der Mittenspannung Vm verbunden ist, und andererseits direkt mit dem nichtinvertierenden Eingang R+ eines Reglers R verbunden ist. Der invertierende Eingang R- des Reglers R ist mit dem Pluspol der Mittenspannung Vm verbunden, und sein Ausgang ist mit dem vierten Sondenanschluß Rc verbunden.

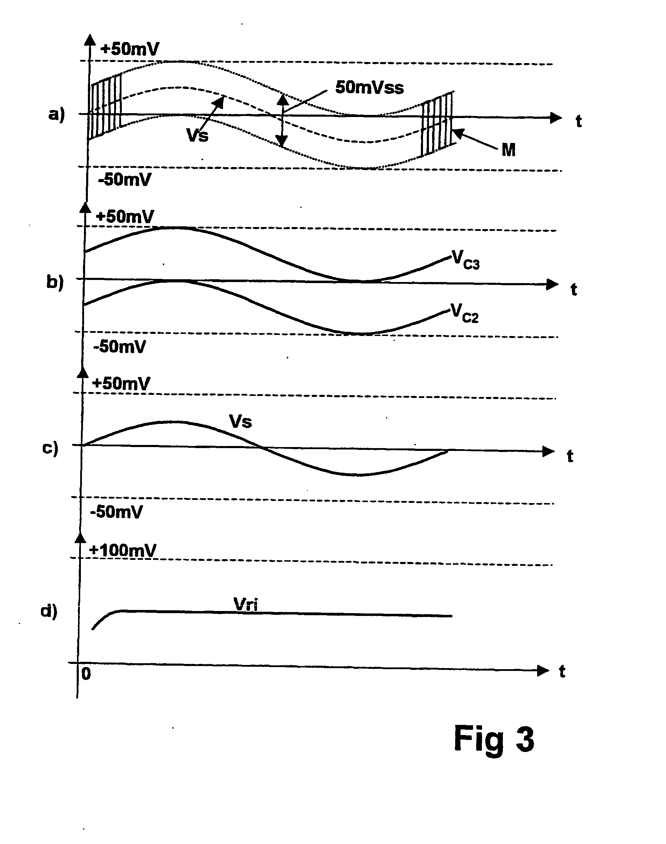

Am Sondenanschluß Vs+ ist die Summenspannung Vsum aus Nernstspannung Vs und der am Sondeninnenwiderstand Ris abfallenden, vom Meßsignal M bewirkten Rechteckspannung Vr abgreifbar, welche in Figur 3a dargestellt ist. Die Spannungen in Figur 3a bis 3c sind jeweils auf das positive Potential von Vm (Abszisse) bezogen, die Mittenspannung Vm (= 2.5V) selbst ist nicht dargestellt.

Die Nernstspannung Vs verlaufe (als theoretisches Beispiel) sinusförmig - als Regelabweichung, verursacht durch Änderungen des λ-Werts - mit sehr niedriger Frequenz (etwa 50Hz) und einer Amplitude von 50mVss; das Meßsignal M sei ein rechteckförmig verlaufender Strom von 500µAss mit einer Frequenz von 3kHz, wie bereits angegeben, welcher am Sondeninnenwiderstand Ris eine Rechteckspannung Vr von 500µAss*100Ω = 50mVss bewirkt. Die Nernstspannung Vs entspricht genau dem Mittelwert zwischen dem Oberwert OW und dem Unterwert UW der Summenspannung Vsum (= Vr + Vs, Figur 3a).

Nachstehend wird das Verfahren zur Bestimmung der Nernstspannung Vs sowie des Sondeninnenwiderstandes Ris aus der Summenspannung Vsum und der Erzeugung eines Sauerstoff-Referenzstromes Icp näher erläutert.

Bestimmung der Nernstspannung Vs aus der Summenspannung Vsum:

Die Summenspannung Vsum aus Nernstspannung Vs und der ihr überlagerten Rechteckspannung Vr liegt an den Schaltern S1a und S1b. Die Schalter S1a und S1b werden synchron abwechselnd geschlossen und geöffnet, und zwar mit der Frequenz f (48kHz), siehe Figur 4a, und mit einer Einschaltdauer von 50% (d.h., Ein- und Ausschaltdauer sind gleich lang). Befindet sich die Summenspannung Vsum auf ihrem Oberwert OW, so wird bei geschlossenen Schaltern S1a und S1b der erste Kondensator C1 auf diesen Wert aufgeladen.

Werden anschließend die Schalter S1a und S1b geöffnet und die Schalter S2a und S2c geschlossen, so erfolgt ein Ladungsausgleich zwischen dem ersten Kondensator C1 und dem dritten Kondensator C3. Wiederholt man diese Vorgänge mehrmals, solange sich die Summenspannung Vsum auf ihrem Oberwert OW befindet (Figur 4a, 4b, 4c und 4e), so erreicht die Spannung am dritten Kondensator C3 den momentanen Oberwert OW der Summenspannung Vsum. Die Spannung $V_{C3}$ am dritten Kondensator C3 folgt also dem Oberwert OW der Summenspannung Vsum (Fig. 3b).

Solange sich anschließend die Summenspannung Vsum auf ihrem Unterwert UW befindet, bleibt die am dritten Kondensator C3 anliegende Spannung gespeichert. In dieser Zeit wird durch abwechselnde Betätigung der Schalter S1a-S1b und S2b-S2c in analoger Weise der zweite Kondensator C2 auf den Unterwert UW ($V_{C2}$) der Summenspannung Vsum aufgeladen; dieser wird gespeichert, solange sich die Summenspannung Vsum auf ihrem Oberwert OW befindet (Figur 4a, 4b, 4d und 4e). Die Spannung $V_{c2}$ am zweiten Kondensator C2 folgt also dem Unterwert UW der Summenspannung Vsum (Figur 3b).

Um eine Entladung der Kondensatoren C2 und C3 während der Speicherphase zu vermeiden, sind ihnen die Entkopplungsverstärker V1 und V2 mit Verstärkungsfaktor 1 nachgeschaltet, an deren Ausgängen jeweils die gleiche Spannung wie am zweiten Kondensator C2 bzw. am dritten Kondensator C3 liegt.

Am Abgriff des Spannungsteilers aus den beiden gleich großen Widerständen R5 und R6, die zwischen den Ausgängen der beiden Entkopplungsverstärker V1 und V2 angeordnet sind, erhielte man die Nernstspannung Vs (Figur 3c), die in der Mitte zwischen Ober- und Unterwert der Summenspannung Vsum liegt (Figur 3a), bezogen auf die Mittenspannung Vm, wenn die Fußpunkte der Kondensatoren C2 und C3 an der Mittenspannung Vm liegen würden.

Der Regler R benötigt jedoch die Differenz ΔVs zwischen Nernstspannung Vs und Referenzspannung Vref. Infolge der Verbindung der Mittenspannung Vm und der Referenzspannung Vref an ihren Pluspolen liegen die Fußpunkte der Kondensatoren C2 und C3 jedoch auf einem Potential, welches der Differenz Vm - Vref zwischen Mittenspannung Vm und Referenzspannung Vref entspricht, sodass am Abgriff des Spannungsteilers R5-R6 bereits die Differenz ΔVs = Vs - Vref erscheint, welche dem nichtinvertierenden Eingang R+ des Reglers R zugeführt wird. Mit dem Kondensator C4 wird erforderlichenfalls eine Glättung dieser Spannung ermöglicht.

Der Regler R vergleicht dieses Signal mit der an seinem invertierenden Eingang anliegenden Mittenspannung Vm. Als Folge einer etwaigen Abweichung ΔVs - Vm erzeugt der Regler R eine von von der Mittenspannung Vm abweichende Ausgangsspannung. Diese Ausgangsspannung wird über die Parallelschaltung der Widerstände Rc und Rp dem invertierenden Eingang P+ der Pumpstromquelle P zugeführt, deren nichtinvertierender Eingang P-wiederum mit Vm verbunden ist. Die zwischen den Anschlüssen Vp+ und Vp-/Vs- befindlichen Pumpelektroden der Sonde sind ebenfalls mit dem invertierenden Eingang und dem Ausgang der Pumpstromquelle verbunden.

Die Pumpstromquelle P wird nun versuchen, durch Veränderung ihrer Ausgangsspannung die Spannungsdifferenz zwischen ihrem invertierenden und nichtinvertierenden Eingang auf Null zu regeln.

Erzeugt nun der Regler R eine von Vm abweichende Ausgangsspannung, so würde die Spannung am invertierenden Eingang der Pumpstromquelle dieser folgen; sie wäre ungleich Vm. Die Pumpstromquelle P regelt deshalb ihre Ausgangsspannung so, daß über die Sondenanschlüsse Vp+ und Vp-/Vs- ein Strom Ip erzeugt wird. Dieser Strom fließt auch durch die Parallelschaltung der Widerstände Rc und Rp und erzeugt dort einen Spannungsabfall, welcher der Differenz zwischen Reglerausgangsspannung und Vm entspricht. Dadurch stellt sich am invertierenden Eingang P-der Pumpstromquelle P wiederum die Spannung Vm ein.

Verbindet man nun die Eingänge des Verstärkers IS mit der Parallelschaltung von Rc und Rp, so kann man diesen Strom Ip sehr genau als Spannungsabfall V(Ip) an den Widerständen Rc||Rp messen. Man erhält auf diese Weise eine dem Pumpstrom Ip - und damit dem λ-Wert des Abgases - proportionale Spannung V(Ip).

Die Spannung $V_{C3}$ am dritten Kondensator C3 beträgt:

$$V_{C3} = Vm - Vref + Vs + 25mV \text{ (von Vr).}$$

Die Spannung $V_{C2}$ am zweiten Kondensator C2 beträgt:

$$V_{C2} = Vm - Vref + Vs - 25mV \text{ (von Vr)}.$$

Im eingeschwungenen Regelzustand (Vs = Vref) beträgt die Spannung am dritten Kondensator C3 demnach $V_{c3}$ = Vm + 25mV, am zweiten Kondensator C2 dann entsprechend $V_{c2}$ = Vm - 25mV; und ΔVs = 0.

Bestimmung des Sondeninnenwiderstandes Ris aus dem Summensignal Vsum:

Wie bereits beschrieben, wird der Lambdasonde S das Meßsignal M (500μAss) zugeführt. Durch diesen Wechselstrom fällt am Sondeninnenwiderstand Ris (der beispielsweise momentan 100Ω betrage) eine von seinem momentanen Wert abhängige Rechteckspannung Vr von 500μAss*Ris = 500μAss*100Ω = 50mVss = ±25mV ab. Diese Spannung entspricht der Differenz $V_{C3}$ - $V_{C2}$ der Ausgangsspannungen der beiden Entkopplungsverstärker V1 und V2 und wird im Differenzverstärker D gebildet. Sie kann, nach Filterung durch das RC-Glied R7-C4, als "Temperaturmessspannung" Vri zur Regelung der Sondentemperatur herangezogen werden (Figur 3d).

Erzeugung eines Sauerstoff-Referenzstromes Icp:

Einige Lambdasonden benötigen zum Betrieb eine künstliche (gepumpte) Sauerstoffreferenz. Diese läßt sich erzeugen, indem mittels eines kleinen Stromes Icp (z.B. 25μA) Sauerstoff aus der Meßzelle zur positiven Referenzelektrode Vs+ gepumpt wird. Die dadurch an der Referenzelektrode entstandene Sauerstoffkonzentration dient dann ihrerseits als Referenz zur Messung der Sauerstoffkonzentration in der Meßzelle. Die Auswerteschaltung muß diesen Strom bereitstellen.

Bedingt durch den Pumpstrom Ip schwankt die Spannung am Sondenanschluss Vp-/Vs- zwischen 0.5V und 4.5V. Wegen der Nernstspannung Vs liegt die Spannung am Anschluß Vs+ um 450mV höher; sie schwankt also zwischen 0.95V und 4.95V.

Die Erzeugung eines Sauerstoff-Referenzstromes Icp erfolgt bisher mit einer Stromquelle, deren Versorgungsspannung oberhalb von 5V, beispielsweise bei 8V liegt. Diese Spannung wird entweder mit einem zusätzlichen Regler aus der Batteriespannung (12V) oder mittels einer Ladungspumpe mit zusätzlicher Stabilisierung aus der 5V-Versorgungsspannung Vcc gewonnen.

Die erstgenannte Schaltung versagt bei niedriger Batteriespannung (Vbatmin = 6V), die zweite Schaltung benötigt zusätzlichen Schaltungsaufwand, verbunden mit der Gefahr von Störungen durch die Schaltvorgänge der Ladungspumpe.

Die erfindungsgemäße Schaltung umgeht diese Probleme bei gleichzeitigem minimalem, zusätzlichen Schaltungsaufwand. Sie besteht aus dem Widerstand R4, sowie den beiden Schaltern S3a und S3b. Schalter S3a schaltet synchron zur positiven Amplitude der Rechteckspannung Vr (3kHz); Schalter S3b schaltet gegenphasig dazu - synchron zur negativen Amplitude der Rechteckspannung Vr.

Wie oben beschrieben, liegt am zweiten Kondensator C2 die Spannung $V_{C2}$ = Vm - 25mV und am dritten Kondensator C3 die Spannung $V_{C3}$ = Vm + 25mV. Beide Spannungen liegen also recht nahe bei Vm. Verbindet man nun den an der Versorgungsspannung Vcc = 5V liegenden Widerstand R4 (beispielsweise 100Ω) über Schalter S3a mit dem dritten Kondensator C3 oder über Schalter S3b mit dem zweiten Kondensator C2, so wird, bei leitenden Schaltern, ein Strom Icp fließen: Icp = (Vcc-Vm)/100kOhm = 25μA.

Bedingt durch das Schalten der Schalter S3a und S3b gelangt dieser Strom immer auf denjenigen der Kondensatoren C2 und C3, der gerade der Summenspannung Vsum folgt. Er baut dort eine Ladung auf. Liegt der Oberwert OW der Summenspannung Vsum an, so ist Schalter S3a geschlossen und der Strom Icp fließt in den Kondensator C3. Liegt der Unterwert UW der Summenspannung Vsum an, so ist Schalter S3b geschlossen und der Strom Icp fließt in den Kondensator C2.

Der jeweils in der Speicherphase befindliche Kondensator ist nicht mit Widerstand R4 verbunden, so daß keine Verfälschung des gespeicherten Spannungswertes durch diesen Strom erfolgt.

Die Kondensatoren C2 und C3 sind durch das schnelle Schalten der Schalter S2a, S2b, S2c (Figur 4) abwechselnd mit Kondensator C1 verbunden, so daß ein steter Ladungsaustausch stattfindet. Dadurch gelangt nun der Strom Icp = 25μA über Widerstand R4 auch in den Kondensator C1 und weiter durch die Schalter S1a und S1b an die Anschlüsse Vs- und Vs+ der Lambdasonde S. In diesem Falle wird der geschaltete Kondensator C1 in umgekehrter Richtung zum Energietransport für die Erzeugung des Sauerstoff-Referenzstromes Icp verwendet.

Durch gleichzeitig geöffnete Schalter S3a und S3b kann der Sauerstoff-Referenzstrom Icp unterbrochen werden. Dies kann beispielsweise während der Anheizphase der Lambdasonde S erforderlich sein.

Durch die annähernd konstanten Spannungsverhältnisse am Widerstand R4 ist der Strom Icp sehr stabil und einfach zu erzeugen.

Figur 5 zeigt ein mögliches Ausführungsbeispiel einer im Oszillator OSZ (Figur 2) befindlichen Schaltung zur Erzeugung der Ansteuersignale für die Schalter S1a, S1b, S2a, S2b, S2c, S3a und S3b, bei denen es sich um elektronische Schalter handelt.

Die Ansteuersignale für die Schalter werden aus dem im Oszillator OSZ gebildeten (rechteckförmigen Wechselstrom-) Oszillatorsignal OS mit der Frequenz f = 2$^x$*fm (beispielsweise 48kHz) und dem aus ihm durch Frequenzteilung gewonnenen Messsignal M mit der Frequenz fm (3kHz) sowie einem Erlaubnissignal E gebildet. Die Phasenlage zwischen den Signalen OS und M sei dabei so, daß Signal M in der Mitte des Low-Pegels von OS auf High-Pegel geht (90° Phasenverschiebung), siehe Figur 4b und 4e.

Die Schalter S1a und S1b werden synchron mit dem Oszillatorsignal OS angesteuert (Figuren 4a, 5); mit dem mittels eines Inverters I1 invertierten Oszillatorsignal OS wird Schalter S2c angesteuert (Figur 4b). Die drei Schalter S1a, S1b und S2c werden kontinuierlich angesteuert.

Das Meßsignal M, dessen Verlauf dem Ansteuersignal für den Schalter S3a gleicht (Figur 4e) und das Ansteuersignal für den Schalter S2c werden einem UND-Glied U1 zugeführt, dessen Ausgangssignal das Ansteuersignal für Schalter S2a ist.

Das mittels eines Inverters I2 invertierte Meßsignal M und das Ansteuersignal für den Schalter S2c werden einem UND-Glied U2 zugeführt, dessen Ausgangssignal das Ansteuersignal für Schalter S2b ist.

Das Meßsignal M wird einem Eingang eines UND-Gliedes U4, das invertierte Meßsignal M einem Eingang eines UND-Gliedes U3 zugeführt. Dem jeweils anderen Eingang der UND-Glieder U3 und U4 wird ein Erlaubnissignal E zugeführt, durch welches die Ausgangssignale dieser beiden UND-Glieder, d.h., die Ansteuersignale der für die Erzeugung des Sauerstoff-Referenzstroms Icp benötigten Schalter S3a und S3b, durchgelassen (E = High) oder gesperrt (E = Low) werden, wie bereits weiter oben dargelegt.

Die erfindungsgemäße Vorrichtung zum Betrieb einer linearen Lambdasonde erfüllt alle eingangs genannten Anforderungen bei minimalem Schaltungsaufwand:

die Messung des Pumpstroms Ip erfolgt gleichtaktfrei und dadurch genauer als bisher möglich;

die Entkopplung von Nernstspannung Vs und Rechteckspannung Vr gelingt wesentlich besser als bisher, die Nernstspannung Vs zeigt praktisch keine Reste der Rechteckspannung Vr; die Abschwächung der Rechteckspannung Vr in der Nernstspannung Vs beträgt ca. 34dB, und zwar ohne Phasenverschiebung! Dadurch werden Rückwirkungen auf die Pumpstrom-Regelschleife vermieden;

das ungefilterte Fehlersignal ΔVs (zwischen den Widerständen R5 und R6 in Figur 2) zeigt minimale Reste der Rechteckspannung Vr, die in Figur 6 dargestellt sind, welche jedoch nach Filterung mittels des Kondensators C4 praktisch verschwinden;

die Messung des Sondeninnenwiderstandes Ris ist präzise und unempfindlich gegen Störeinflüsse, sie zeigt nach Glättung mittels des RC-Gliedes R7-C5 (Figur 2) keinerlei Rückwirkung der Nernstspannung Vs;

die Erzeugung des Sauerstoff-Referenzstroms Icp ist sehr stabil und nicht vom Gleichtaktsignal der Sonde abhängig;

die Schaltung kommt mit einer einzigen Versorgungsspannung Vcc (5V) aus und eignet sich bestens zur Integration in ein ASIC; und

durch die erfolgreiche Entkopplung von Nernstspannung Vs und Rechteckspannung Vr ist die erfindungsgemäße Schaltung für schnelle Lambdamessungen geeignet, wie sie beim Betrieb von HPDI-Motoren erforderlich sind.

**Patentansprüche**

1.  Verfahren zum Betrieb einer linearen Lambdasonde (S) einer Brennkraftmaschine mit einem ersten (Vs+), einem zweiten (Vp-/Vs-), einem dritten (Vp+) und einem vierten Anschluss (Rc), wobei am ersten Anschluss (Vs+) ein rechteckförmig verlaufender Strom mit einer von einem Oszillatorsignal (OS) mit einer Frequenz (f) durch Frequenzteilung abgeleiteten, niedrigeren Frequenz (fm) als Messsignal (M) eingespeist wird, welches eine am Sondeninnenwiderstand (Ris) abfallende Rechteckspannung (Vr) bewirkt, die mit der zwischen erstem und zweitem Anschluss (Vs+, Vs-/Vp-) abgreifbaren Nernstspannung (Vs) eine Summenspannung (Vsum) bildet, deren obere und untere Einhüllende einen Oberwert (OW) und einen Unterwert (UW) bestimmen,
    **dadurch gekennzeichnet,**
    **dass** die Summenspannung (Vsum) auf die Differenz (Vm - Vref) einer vorgegebenen Mittenspannung (Vm) und einer vorgegebenen Referenzspannung (Vref) bezogen ist, und
    **dass** zur Ermittlung der Sauerstoff-Konzentration (λ) im Abgas der Brennkraftmaschine der der Differenz (ΔVs) von Nernstspannung (Vs) und Referenzspannung (Vref) entsprechende Mittelwert aus Oberwert (OW) und Unterwert (UW) der Summenspannung (Vsum) gebildet und in einen proportionalen Pumpstrom (Ip) gewandelt wird, welcher am Kalibrierwiderstand (Rc) der Lambdasonde (S) einen Spannungsabfall (V[Ip]) verursacht, der als Maß für die Sauerstoff-Konzentration (λ) im Abgas der Brennkraftmaschine dient.

2.  Verfahren nach Anspruch 1, **dadurch gekennzeichnet, dass** die Differenz (OW - UW) von Oberwert (OW) und Unterwert (UW) der Summenspannung (Vsum) gebildet und als Temperaturmessspannung (Vri) zur Regelung der Sondentemperatur verwendet wird.

3. Verfahren nach Anspruch 2, **dadurch gekennzeichnet, dass** die Temperaturmessspannung (Vri) tiefpassgefiltert wird.

4. Verfahren nach Anspruch 1, **dadurch gekennzeichnet, dass** der Referenzzelle der Lambdasonde (S) ein vorgegebener Sauerstoff-Referenzstrom (Icp) zuführbar ist.

5. Vorrichtung zur Durchführung des Verfahrens nach Anspruch 1,
mit einer Auswerteschaltung, welche mit der Lambdasonde (S) über deren Anschlüsse verbunden ist,
mit einem Oszillator (OSZ), der ein Oszillatorsignal (OS) mit einer Frequenz (f) und ein durch Frequenzteilung aus diesem abgeleitetes Messsignal (M) mit einer niedrigeren Frequenz (fm) erzeugt, welches dem ersten Sondenanschluss (Vs+) zugeführt wird,
mit einem Differenzverstärker (IS), dessen invertierender Eingang (IS-), mit dem dritten Sondenanschluss (Vp+) , und dessen nichtinvertierender Eingang mit dem vierten Sondenanschluss (Rc) verbunden ist, und
mit einem Regler (R) und einer Pumpstromquelle (P),
**dadurch gekennzeichnet,**
**dass** ein zweiter Kondensator (C2) vorgesehen ist, in welchen laufend der Unterwert (OW) der Summenspannung (Vsum) gespeichert wird,
**dass** ein dritter Kondensator (C3) vorgesehen ist, in welchen laufend der Oberwert (OW) der Summenspannung (Vsum) gespeichert wird,
wobei die Fußpunkte des zweiten und dritten Kondensators (C2, C3) mit dem zweiten Sondenanschluß (Vs-/Vp-) verbindbar sind und mit dem Minuspol einer Referenzspannung (Vref) verbunden sind, wobei der Pluspol der Referenzspannung (Vref) mit dem Pluspol der Mittenspannung (Vm) verbunden ist,
**dass** dem anderen Anschluss des zweiten und dritten Kondensators (C2, C3) je ein Entkopplungsverstärker (V1, V2) nachgeschaltet ist, und
**dass** die Ausgänge der beiden Entkopplungsverstärker (V1, V2) mittels eines Spannungsteilers (R5, R6) miteinander verbunden sind, dessen Abgriff mit dem nichtinvertierenden Eingang (R+) des Reglers (R) verbunden ist,

 - dessen Ausgang mit dem vierten Sondenanschluss (Rc) verbunden ist, und
 - dessen invertierender Eingang (R-) an der Mittenspannung (Vm) liegt und mit dem nichtinvertierenden Eingang (P+) der Pumpstromquelle (P) verbunden ist,

**dass** der invertierende Eingang (P-) der Pumpstromquelle (P) mit dem dritten Sondenanschluss (Vp+) verbunden ist, und
**dass** der Ausgang der Pumpstromquelle (P) mit dem zweiten Sondenanschluss (Vp-/Vs-) verbunden ist.

6. Vorrichtung nach Anspruch 5, **dadurch gekennzeichnet, dass** ein Differenzverstärker (D) vorgesehen ist, dessen nichtinvertierender Eingang (D+) mit dem Ausgang des ersten Entkopplungsverstärkers (V1) verbunden ist, dessen invertierender Eingang (D-) mit dem Ausgang des zweiten Entkopplungsverstärkers (V2) verbunden ist, und an dessen Ausgang die Temperaturmessspannung (Vri) abgreifbar ist.

7. Vorrichtung nach Anspruch 6, **dadurch gekennzeichnet, dass** dem Differenzverstärker (D) ein Tiefpassfilter (R7, C5) nachgeschaltet ist.

8. Vorrichtung nach Anspruch 5, **dadurch gekennzeichnet, dass** ein erster Kondensator (C1) vorgesehen ist, dessen Fußpunkt über einen Schalter (S1b) mit dem zweiten Sondenanschluss (Vp-/Vs-) und über einen weiteren Schalter (S2c) mit den Fußpunkten des zweiten (C2) und dritten Kondensators (C3) verbunden ist, und dessen anderer Anschluss über einen Schalter (S1a) mit dem ersten Sondenanschluss (Vs+), über einen Schalter (S2b) mit dem anderen Anschluss des zweiten Kondensators (C2), und über einen Schalter (S2a) mit dem anderen Anschluss des dritten Kondensators (C3) verbunden ist.

9. Vorrichtung nach Anspruch 8, **dadurch gekennzeichnet,**
**dass** ein Schalter (S3b) vorgesehen ist, über welchen dem zweiten Kondensator (C2) und über diesen und den ersten Kondensator (C1) der Referenzzelle der Lambdasonde (S) ein vorgegebener Sauerstoff-Referenzstrom (Icp) zuführbar ist, solange die Summenspannung (Vsum) auf ihrem Oberwert (OW) liegt, und
**dass** ein Schalter (S3a) vorgesehen ist, über welchen dem dritten Kondensator (C3) und über diesen und den ersten Kondensator (C1) der Referenzzelle der Lambdasonde (S) der vorgegebene Sauerstoff-Referenzstrom (Icp) zuführbar ist, solange die Summenspannung (Vsum) auf ihrem Unterwert (UW) liegt.

10. Vorrichtung nach Anspruch 8, **dadurch gekennzeichnet, dass** eine Schaltung zur Betätigung der Schalter (S1a, S1b, S2a, S2b, S2c, S3a und S3b) vorgesehen ist,
welche mit der Frequenz (f) des Oszillatorsignals (OS) den ersten Kondensator (C1) abwechselnd
über die Schalter (S1a, S1b) mit der Referenzzelle der Lambdasonde (S), und über die Schalter (S2a, S2c) mit dem dritten Kondensator (C3) verbindet, solange die Summenspannung (Vsum) auf ihrem Oberwert (OW) liegt, und
über die Schalter (S1a, S1b) mit der Referenzzelle der Lambdasonde (S), und über die Schalter (S2b, S2c) mit dem zweiten Kondensator (C2) verbindet, solange die Summenspannung (Vsum) auf ihrem Unterwert (UW) liegt.

**Claims**

1. Method for operating a linear lambda probe (S) of an internal combustion engine having a first terminal (Vs+), a second terminal (Vp-/Vs-), a third terminal (Vp+) and a fourth terminal (Rc), a current with a square-wave profile and relatively low frequency (fm) which is derived from an oscillator signal (OS) with a frequency (f) by means of frequency division is supplied at the first terminal (Vs+) as a measurement signal (M) which brings about a square-wave voltage (Vr) which drops across the internal resistor (Ris) of the probe and forms, with the Nernst voltage (Vs) which can be tapped between the first and second terminals (Vs+, Vs-/Vp-), a sum voltage (Vsum) whose upper and lower envelopes determine an upper value (OW) and a lower value (UW),
**characterized**
**in that** the sum voltage (Vsum) is referred to the difference (Vm - Vref) of a predefined center voltage (Vm) and a predefined reference voltage (Vref), and
**in that**, in order to determine the oxygen concentration ($\lambda$) in the exhaust gas of the internal combustion engine, the mean value corresponding to the difference ($\Delta$vs) between the Nernst voltage (Vs) and reference voltage (Vref) is formed from the upper valve (OW) and lower value (UW) of the sum voltage (Vsum) and is converted into a proportional pump current (Ip) which brings about, at the calibration resistor (Rc) of the lambda probe (S), a voltage drop (V[Ip]) which is used as a measure of the oxygen concentration ($\lambda$) in the exhaust gas of the internal combustion engine.

2. Method according to Claim 1, **characterized in that** the difference (OW - UW) between the upper value (OW) and lower value (UW) of the sum voltage (Vsum) is formed and is used as a temperature measuring voltage (Vri) for regulating the temperature of the probe.

3. Method according to Claim 2, **characterized in that** the temperature measuring voltage (Vri) is low-pass filtered.

4. Method according to Claim 1, **characterized in that** a predefined oxygen reference current (Icp) can be fed to the reference cell of the lambda probe (S).

5. Device for carrying out the method according to Claim 1, having an evaluation circuit which is connected to the lambda probe (S) via its terminals,
having an oscillator (OSZ) which generates an oscillator signal (OS) having a frequency (f), and a measurement signal (M) which is derived therefrom by means of frequency division and has a relatively low frequency (fm) which is fed to the first probe terminal (Vs+),
having a difference amplifier (IS) whose inverting input (IS-) is connected to the third probe terminal (Vp+) and whose noninverting input is connected to the fourth probe terminal (Rc), and
having a controller (R) and a pump current source (P),
**characterized**
**in that** a second capacitor (C2) in which the lower value (OW) of the sum voltage (Vsum) is continuously stored is provided,
**in that** a third capacitor (C3) in which the upper value (OW) of the sum voltage (Vsum) is continuously stored is provided,
the base points of the second and third capacitors (C2, C3) being capable of being connected to the second probe terminal (Vs-/Vp-) and being connected to the negative pole of a reference voltage (Vref), the positive pole of the reference voltage (Vref) being connected to the positive pole of the center voltage (Vm),
**in that** a decoupling amplifier (V1, V2) is connected downstream of each of the other terminals of the second and third capacitors (C2, C3), and

**in that** the outputs of the two decoupling amplifiers (V1, V2) are connected to one another by means of a voltage divider (R5, R6) whose tap is connected to the noninverting input (R+) of the controller (R),

- whose output is connected to the fourth probe terminal (Rc), and
- whose inverting input (R-) lies at the center voltage (Vm) and is connected to the noninverting input (P+) of the pump current source (P),

**in that** the inverting input (P-) of the pump current source (P) is connected to the third probe terminal (Vp+), and
**in that** the output of the pump current source (P) is connected to the second probe terminal (Vp-/Vs-).

6. Device according to Claim 5, **characterized in that** a difference amplifier (D) is provided whose noninverting input (D+) is connected to the output of the first decoupling amplifier (V1),
whose inverting input (D-) is connected to the output of the second decoupling amplifier (V2), and
at whose output the temperature measuring voltage (Vri) can be tapped.

7. Device according to Claim 6, **characterized in that** a low-pass filter (R7, C5) is connected downstream of the difference amplifier (D).

8. Device according to Claim 5, **characterized in that** a first capacitor (C1) whose base point is connected to the second probe terminal (Vp-/Vs-) via a switch (S1b), and to the base points of the second capacitor (C2) and third capacitor (C3) via a further switch (S2c), and
whose other terminal is connected to the first probe terminal (Vs+) via a switch (S1a), to the other terminal of the second capacitor (C2) via a switch (S2b), and to the other terminal of the third capacitor (C3) via a switch (S2a).

9. Device according to Claim 8, **characterized**
**in that** a switch (S3b) is provided via which a predefined oxygen reference current (Icp) can be fed to the second capacitor (C2), and to the reference cell of the lambda probe (S) via said second capacitor (C2) and the first capacitor (C2), as long as the sum voltage (Vsum) is at its upper value (OW), and
**in that** a switch (S3a) is provided via which the predefined oxygen reference current (Icp) can be fed to the third capacitor (C3), and to the reference cell of the lambda probe (S) via said third capacitor (C3) and the first capacitor (C1), as long as the sum voltage (Vsum) is at its lower value (UW).

10. Device according to Claim 8, **characterized in that** a circuit is provided for actuating the switches (S1a, S1b, S2a, S2b, S2c, S3a and S3b), which circuit alternately connects, with the frequency (f) of the oscillator signal (OS), the first capacitor (C1) to the reference cell of the lambda probe (S) via the switches (S1a, S1b), and to the third capacitor (C3) via the switches (S2a, S2c), as long as the sum voltage (Vsum) is at its upper value (OW), and
to the reference cell of the lambda probe (S) via the switches (S1a, S1b), and to the second capacitor (C2) via the switches (S2b, S2c), as long as the sum voltage (Vsum) is at its lower value (UW).

**Revendications**

1. Procédé pour faire fonctionner une sonde lambda linéaire (S) d'un moteur à combustion interne qui comprend une première connexion (Vs+), une deuxième connexion (Vp-/Vs-), une troisième connexion (Vp+) et une quatrième connexion (Rc), dans lequel un courant de forme rectangulaire, possédant une fréquence (fm) dérivée d'un signal d'oscillateur (OS) de fréquence (f), par division de fréquence et plus basse, est appliqué à la première connexion (Vs+) en constituant un signal de mesure (M) qui engendre aux bornes de la résistance interne de la sonde (Ris) une tension rectangulaire (Vr) décroissante, laquelle forme, avec la tension de Nernst (Vs) qui peut être prise entre les première et deuxième connexions (Vs+, VS-/Vp-), une tension somme (Vsum) dont les enveloppes supérieure et inférieure déterminent une valeur supérieure (OW) et une valeur inférieure (UW),
**caractérisé**
**en ce que** la tension somme (Vsum) est rapportée à la différence (Vm - Vref) entre une tension moyenne prédéterminée (Vm) et une tension de référence prédéterminée (Vref), et
**en ce que**, pour obtenir la concentration de l'oxygène (λ) dans les gaz d'échappement du moteur à combustion interne, on forme la valeur moyenne de la valeur supérieure (OW) et de la valeur inférieure (UW) de la tension somme (Vsum), qui correspond à la différence (ΔVs) entre la tension de Nernst (Vs) et la tension de référence (Vref) et on la convertit en un courant de pompe proportionnel (Ip) qui engendre sur la résistance d'étalonnage (Rc) de la sonde lambda (S) une chute de tension (V [Ip]) qui sert de mesure pour la concentration de l'oxygène (λ) dans les gaz d'échappement du moteur à combustion interne.

2. Procédé selon la revendication 1, **caractérisé en ce qu'**on forme la différence (OW - UW) entre la valeur supérieure (OW) et la valeur inférieure (UW) de la tension somme (Vsum) et on l'utilise comme tension de mesure de la température (Vri) pour la régulation de la température de la sonde.

3. Procédé selon la revendication 2, **caractérisé en ce que** la tension de mesure de la température (Vri) est filtrée par un filtre passe-bas.

4. Procédé selon la revendication 1, **caractérisé en ce qu'**un courant de référence d'oxygène prédéterminé (Icp) peut être amené à la cellule de référence de la sonde lambda (S).

5. Dispositif pour la mise en oeuvre du procédé selon la revendication 1, comprenant
un circuit d'analyse qui est relié à la sonde lambda (S) par l'intermédiaire des connexions de cette dernière,
un oscillateur (OSZ) qui produit un signal d'oscillateur (OS) possédant une fréquence (f) et un signal de mesure (M) qui en est dérivé par une division de fréquence et possède une fréquence plus basse (fm), et qui est appliqué à la première connexion (Vs+) de la sonde,
un amplificateur différentiel (IS) dont l'entrée inverseuse (IS-) est reliée à la troisième connexion (Vp+) de la sonde et dont l'entrée non inverseuse est reliée à la quatrième connexion (Rc) de la sonde, et
un régulateur (R) et une source de courant de pompe (P),
**caractérisé**
**en ce qu'**il est prévu un deuxième condensateur (C2) dans lequel la valeur inférieure (OW) de la tension somme (Vsum) est mémorisée continuellement,
**en ce qu'**il est prévu un troisième condensateur (C3) dans lequel la valeur supérieure (OW) de la tension somme (Vsum) est mémorisée continuellement,
les bases des deuxième et troisième condensateurs (C2, C3) pouvant être reliées à la deuxième connexion (Vs-/Vp-) de la sonde et étant reliées au pôle moins d'une tension de référence (Vref), tandis que le pôle plus de la tension de référence (Vref) est relié au pôle plus de la tension moyenne (Vm)
**en ce qu'**un amplificateur de découplage (V1, V2)est connecté en aval de l'autre connexion de chacun des deuxième et troisième condensateurs (C2, C3), et
**en ce que** les sorties des deux amplificateurs de découplage (V1, V2) sont reliées entre elles au moyen d'un diviseur de tension (R5, R6) dont la prise est reliée à l'entrée non inverseuse (R+) du régulateur (R),

 - dont la sortie est reliée à la quatrième connexion (Rc) de la sonde et
 - dont l'entrée inverseuse (R-) est à la tension moyenne (Vm) et est reliée à l'entrée non inverseuse (P+) de la source de courant de pompe (P),

**en ce que** l'entrée inverseuse (P-) de la source de courant de pompe (P) est reliée à la troisième connexion (Vp+) de la sonde, et
**en ce que** la sortie de la source de courant de pompe (P) est relié à la deuxième connexion (Vp-,Vs-) de la sonde.

6. Dispositif selon la revendication 5, **caractérisé en ce qu'**il est prévu un amplificateur différentiel (D)
dont l'entrée non inverseuse (D+) est reliée à la sortie du premier amplificateur de découplage (V1),
dont l'entrée inverseuse (D-) est reliée à la sortie du deuxième amplificateur de découplage (V2), et
à la sortie duquel la tension de mesure de la température (Vri) peut être prise.

7. Dispositif selon la revendication 6, **caractérisé en ce qu'**un filtre passe-bas (R7, C5) est connecté en aval de l'amplificateur différentiel (D).

8. Dispositif selon la revendication 5, **caractérisé en ce qu'**il est prévu un premier condensateur (C1)
dont la base est reliée à la deuxième connexion (Vp-/Vs-) de la sonde par l'intermédiaire d'un interrupteur (S1b) et aux bases du deuxième condensateur (C2) et du troisième condensateur (C3) par l'intermédiaire d'un autre interrupteur (S2c), et
dont l'autre connexion est reliée à la première connexion (Vs+) de la sonde par l'intermédiaire d'un interrupteur (S1a), à l'autre connexion du deuxième condensateur (C2) par l'intermédiaire d'un interrupteur (S2b) et à l'autre connexion du troisième condensateur (C3) par l'intermédiaire d'un interrupteur (S2a).

9. Dispositif selon la revendication 8, **caractérisé**

**en ce qu'**il est prévu un interrupteur (S3b) par l'intermédiaire duquel un courant de référence d'oxygène prédéterminé (Icp) peut être amené au deuxième condensateur (C2) et, par l'intermédiaire de ce dernier et du premier condensateur (C1), à la cellule de référence de la sonde lambda (S), aussi longtemps que la tension somme (Vsum) se trouve à sa valeur supérieure (OW), et

**en ce qu'**il est prévu un interrupteur (S3a) par l'intermédiaire duquel le courant de référence d'oxygène prédéterminé (Icp) peut être amené au troisième condensateur (C 3) et, par l'intermédiaire de ce dernier et du premier condensateur (C1), à la cellule de référence de la sonde lambda (S), aussi longtemps que la tension somme (Vsum) se trouve à sa valeur inférieure (UW)

10. Dispositif selon la revendication 8, **caractérisé en ce qu'**il est prévu un circuit pour l'actionnement des interrupteurs (S1a, S1b, S2a, S2b, S2c, S3a et S3b),
qui relie le premier condensateur (C1) en alternance, à la fréquence (f) du signal (OS) de l'oscillateur,
à la cellule de référence de la sonde lambda (S) par l'intermédiaire des interrupteurs (S1a, S1b) et au troisième condensateur (C3) par l'intermédiaire des interrupteurs (S2a, S2c) aussi longtemps que la tension somme (Vsum) se trouve à sa valeur supérieure (OW) et
à la cellule de référence de la sonde lambda (S) par
l'intermédiaire des interrupteurs (S1a, S1b) et au deuxième condensateur (C2) par l'intermédiaire des interrupteurs (S2b, S2c) aussi longtemps que la tension somme (Vsum) est à sa valeur inférieure (UW)

Fig 1

Fig 6

Fig 2

EP 1 290 433 B1

**Fig 3**

**Fig 4**

**Fig 5**

EP 1 290 433 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3817518